# EUROPEAN PATENT APPLICATION

(11) **EP 1 961 988 A2**
(43) Date of publication of application: **27.08.2008**
(21) Application number: 08151670.0
(22) Date of filing: 20.02.2008
(51) Int. Cl.: F16F 1/387, F16F 1/44, F16F 1/376

(54) **Stopper structure and vibration-proofing structure for vehicle**

(30) Priority: 21.02.2007 JP 2007040845
(71) Applicant: Toyota Jidosha Kabushiki Kaisha, Toyota-shi, Aichi-ken 471-8571 (JP)
(72) Inventor: Niwa, Kenji, Toyota-shi, Aichi-ken 471-8571 (JP)
(74) Representative: Intes, Didier Gérard André

(57) **Abstract**

A stopper structure (10) includes a first stopper surface (36) and a second stopper surface (38) that are provided between a vehicle body (16) and a rear suspension member (12) that are connected to each other in a manner such that the vehicle body (16) and the rear suspension member (12) are displaced relative to each other. When the rear suspension member (12) is displaced relative to the vehicle body (16), the second stopper surface (38) contacts the vehicle body (16) to perform a stopper function a predetermined time after the first stopper surface (36) contacts the vehicle body (16) to function the stopper function.

## Description

### BACKGROUND OF THE INVENTION

### 1. Field of the Invention

The invention relates to a stopper structure that restricts the displacement of, for example, an engine or a suspension member relative to a vehicle, and a vibration-proofing structure for a vehicle to which the stopper structure is applied.

### 2. Description of the Related Art

Japanese Patent Application Publication No. 2005-9628 describes a structure in which a vibration-proofing base made of a rubber elastic body is provided between a first fitting portion fitted to a vehicle body, and a second fitting portion fitted to an engine; and a stopper rubber is disposed between the first fitting portion and a stopper flange of the second fitting portion. In the structure, the stopper rubber has a wave shape to improve shock-absorbing performance and durability.

However, in the above-described technology, because the stopper rubber has the wave shape to decrease the spring constant, thereby suppressing abnormal sounds and vibrations, the size of the stopper rubber needs to be increased to improve the shock-absorbing performance and durability.

### SUMMARY OF THE INVENTION

The invention provides a stopper structure and a vibration-proofing structure for a vehicle, in which a stopper function is performed when a first member and a second member are displaced relative to each other, and generation of slapping sound and vibrations is suppressed.

According to a first aspect of the invention, a stopper structure includes: stopper means that is provided between a first member and a second member that are connected to each other in a manner such that the first member and the second member are displaced relative to each other, wherein the first stopper means restricts a relative displacement between the first member and the second member; and second stopper means that is provided between the first member and the second member, wherein a stopper function of the second stopper means is performed after a stopper function of the first stopper means is performed in a manner such that there is a predetermined time difference between a timing at which the stopper function of the first stopper means is performed and a timing at which the stopper function of the second stopper means is performed, in response to a predetermined input that displaces the first member and the second member relative to each other.

In the stopper structure according to the first aspect, the first stopper means, which is provided in one of the first member and the second member, is disposed to restrict the displacement of the other (facing member) of the first member and the second member relative to the one of the first member and the second member. The second stopper means, which is provided in one of the first member and the second member, is disposed to restrict the displacement of the other of the first member and the second member relative to the one of the first member and the second member. When the first member and the second member are displaced relative to each other due to a predetermined input (an input equal to or larger than a predetermined value at a predetermined speed), first, the first stopper means restricts the displacement of the facing member that faces the first stopper means (i.e., the first member or the second member). Then, after a predetermined time elapses, the second stopper means restricts the displacement of the facing member that faces the second stopper means. This time difference is set as a predetermined time difference so that a vibration (noise) generated when the displacement of the facing member is restricted by the first stopper means (i.e., when a step load is applied) is canceled by another vibration (noise) in a different phase generated when the displacement of the facing member is restricted by the second stopper means (i.e., when another step load is applied). This suppresses generation of slapping sound and vibrations.

Thus, in the stopper structure according to the first aspect, it is possible to perform the stopper function when the first member and the second member are displaced relative to each other, and to suppress generation of slapping sound and vibrations. Because an elastic body with a large volume is not required in this stopper structure, an increase in the size of the stopper structure can be suppressed. Also, each of the first and second stopper portions may be configured as, for example, a physical contact portion. Also, each of the first and second stopper portions may be configured as, for example, a sharp change portion where a spring constant (support load) sharply changes in a structural body that has a non-linear spring characteristic. Also, each of the first and second stopper means may be configured using a rigidity difference (for example, a change in the rigidity between two levels, which is caused without using the stroke difference) in variable rigidity means. When the variable rigidity means is used, the time difference between the timings at which the first and second stopper means perform the stopper functions may be variable.

According to a second aspect of the invention, in the stopper structure according to the first aspect, the predetermined timing difference is set using a difference between an amount by which the first member and the second member are displaced relative to each other until the stopper function of the first stopper means is performed, and an amount by which the first member and the second member are displaced relative to each other until the stopper function of the second stopper means is performed.

In the stopper structure according to the second aspect, for example, each of the first stopper means and the second stopper means performs the stopper function when the first member and the second member are displaced relative to each other, and each of the first stopper means and the second stopper means directly or indirectly contacts (interferes with) the corresponding facing member. In this stopper structure, a stroke until the first stopper means interferes with the corresponding facing member in the relative displacement direction in which the first member and the second member are displaced relative to each other is shorter than a stroke until the second stopper means interferes with the corresponding facing member in the relative displacement direction. Due to this stroke difference (i.e., the difference between the amounts by which the first member and the second member are displaced relative to each other until the stopper functions of the first stopper means and the second stopper means are performed), the first stopper means contacts the corresponding facing member before the second stopper means contacts the corresponding facing member. In other words, the above-described distance difference may be regarded as time difference setting means for making the timing at which the first stopper means is operated different from the timing at which the second stopper means is operated. Thus, with the simple structure in which the above-described stroke difference is set, it is possible to suppress generation of slapping sound and vibrations.

According to a third aspect of the invention, a stopper structure includes: first stopper means made of an elastic body, which is provided in a first member, and which restricts a displacement of a second member relative to the first member when the first stopper means contacts the second member, wherein the second member is connected to the first member in a manner such that the second member is displaced relative to the first member; and second stopper means which is provided in one of the first member and the second member, and which is disposed in a manner such that a distance between the second stopper means and the other of the first member and the second member in a relative displacement direction in which the first member and the second member are displaced relative to each other is longer than a distance between the first stopper means and the second member in the relative displacement distance, by a predetermined distance.

In the stopper structure according to the third aspect, the first stopper means, which is provided in the first member, is disposed to restrict the relative displacement when the first stopper means contacts the second member (facing member) that faces the first member. The second stopper, which is provided in one of the first member and the second member, is disposed to restrict the relative displacement when the second stopper means contacts the other (facing member) of the first member and the second member, which faces the one of the first member and the second member. In the stopper structure, the distance between the first stopper means and the second member in the relative displacement direction in which the first member and the second member are displaced relative to each other is shorter than the distance between the second stopper means and the facing member in the relative displacement direction, by a predetermined distance.

Thus, in the stopper structure, when the first member and the second member are displaced relative to each other due to a predetermined input (an input equal to or larger than a predetermined value at a predetermined speed), first, the first stopper means contacts the second member. Then, after a time elapses according to the speed of the input, the second stopper means contacts the facing member (the first member or the second member). The predetermined distance is set so that this time difference between the timings at which the first stopper means and the second stopper means are operated is equal to the predetermined time difference that is set so that a vibration (noise) generated when the first stopper means contacts the second member is canceled by another vibration (noise) in a different phase generated when the second stopper means contacts the facing member. This suppresses generation of slapping sound and vibrations.

Thus, in the stopper structure according to the third aspect, it is possible to perform the stopper function when the first member and the second member are displaced relative to each other, and to suppress generation of slapping sound and vibrations. Because an elastic body with a large volume is not required in this stopper structure, an increase in the size of the stopper structure can be suppressed.

According to a fourth aspect of the invention, in the stopper structure according to any one of the first to third aspects, a plurality of combinations of the first stopper means and the second stopper means are provided; and the timing at which the stopper function of the first stopper means in each of the combinations is performed is set to be in a predetermined range that is smaller than the predetermined time difference, and the timing at which the stopper function of the second stopper means in each of the combinations is performed is set to be in another predetermined range that is smaller than the predetermined difference.

In the stopper structure according to the fourth aspect, a plurality of combinations of the first stopper means and the second stopper means are provided. When the first member and the second member are displaced relative to each other due to the above-described predetermined input, the stopper functions of the first stopper means in the combinations are performed in the predetermined time range (preferably, at the same time), and then, the stopper functions of the second stopper means in the combinations are performed in the other predetermined time range (preferably, at the same time). Thus, it is possible to suppress the influence of the difference among the timings at which the plurality of first stopper means are operated, and the difference among the timings at which the plurality of second stopper means are operated, and to effectively suppress generation of slapping sound and vibrations using a phase difference between vibrations (noises) generated by the plurality of first stopper means and the plurality of second stopper means, while the stopper load is dispersed among, and supported by the plurality of first stopper means and the plurality of second stopper means. The manner in which the combinations of the first stopper means and the second stopper means are disposed is not limited to a specific manner. For example, the combinations may be disposed along a straight line, or in a ring shape. That is, in this stopper structure, the degree of flexibility in the shape of the stopper means (the manner in which the stopper means are disposed) is high.

According to a fifth aspect of the invention, in the stopper structure according to any one of the first to fourth aspects, the stopper structure is formed to have a ring shape; and a plurality of the first stopper means and a plurality of the second stopper means are disposed in a circumferential direction.

The entire stopper structure according to the fifth aspect is formed in a ring shape. The plurality of first stopper means and the plurality of second stopper means are disposed in the circumferential direction. Therefore, it is possible to suppress generation of slapping sound and vibrations using the phase difference between the vibrations (noises) generated by the first and second stopper means, while the stopper load is among, and supported by of the stopper structure in the circumferential direction in a balanced manner.

According to a sixth aspect of the invention, in the stopper structure according to any one of the first to fifth aspects, the first stopper means and the second stopper means are formed integrally with an elastic body by making levels of contact portions of the elastic body, which contact the first member or the second member, different from each other.

In the stopper structure according to the sixth aspect, both of the first stopper means and the second stopper means are provided in one of the first member and the second member (in the configuration according to the above third aspect, the first member). By making the levels of the contact portions of the elastic body different from each other, it is possible to make the distance between the first stopper means and the facing member (the second member) different from the distance between the second stopper means and the facing member, that is, to set the stroke difference. That is, the first stopper means and the second stopper means can be configured by one member.

According to a seventh aspect of the invention, in the stopper structure according to any one of the first to sixth aspects, the stopper structure further includes a contact support portion that is provided in one of the first member and the second member, and that contacts the other of the first member and the second member when the first member and the second member are not displaced relative to each other; and the contact support portion, the first stopper means, and the second stopper means are formed in the stated order, integrally with an elastic body that has a stepped shape.

In the stopper structure according to the seventh aspect, for example, in the elastic body with a stepped shape, a high-level portion, an intermediate-level portion, and a low-level portion constitute the contact support portion, the first stopper means, and the second stopper means, respectively. That is, the contact support portion, the first stopper means, and the second stopper means can be formed integrally in the elastic body that is one member provided in one of the first member and the second member (in the configuration according to the third aspect, the first member).

According to an eighth aspect of the invention, in the stopper structure according to any one of the first to sixth aspects, the stopper structure further includes a contact support portion that is provided in one of the first member and the second member, and that contacts the other of the first member and the second member when the first member and the second member are not displaced relative to each other; and the contact support portion, the first stopper means, and the second stopper means are formed integrally with an elastic body in a manner such that the first stopper means is disposed adjacent to, and on a side of the contact support portion, and the second stopper means is disposed adjacent to, and on another side of the contact support portion, which is opposite to the side where the first stopper means is disposed.

In the stopper structure according to the eighth aspect, the first stopper means is formed in the elastic body at the position between the contact support portions. The second stopper means is formed on the side of the contact support portion, which is opposite to the side where the first stopper means is formed. The facing member that faces the first stopper means approaches the first stopper means while the facing member deforms a pair of the contact support portions. This suppresses deviation of the timing at which the first stopper means contacts the facing member due to the deformation of the elastic body. Also, because the contact support portion is provided between the first stopper means and the second stopper means, the deformation caused by performing the stopper function of the first stopper means hardly influences the second stopper means. Thus, in the stopper structure, it is possible to generate the above-described phase difference, thereby improving the effect of suppressing slapping sound and vibrations.

According to a ninth aspect of the invention, in the stopper structure according to any one of the first to fifth aspects, the first stopper means and the second stopper means are formed separately from each other.

In the stopper structure according to the ninth aspect, because the first stopper means and the second stopper means are formed separately from each other, it is possible to reduce the possibility that the operations of the first stopper means and the second stopper means influence each other. For example, when the first stopper means and the second stopper means are provided in a common elastic body, the deformation amounts, by which the first stopper means and the second stopper means are deformed, are likely to influence the time difference between the timings at which the first stopper means and the second stopper means are operated. However, in the stopper structure, it is possible to set the timing at which the first stopper means is operated and the timing at which the second stopper means is operated, separately from each other. Therefore, the design can be easily made.

According to a tenth aspect of the invention, in the stopper structure according to any one of the first to ninth aspects, a protruding portion or a recessed portion is formed in at least one of the first member and the second member to adjust timings at which the first stopper means and the second stopper means contact the at least one of the first member and the second member.

In the stopper structure according to the tenth aspect, the timings at which the first stopper means and the second stopper means contact the at least one of the first member and the second member are adjusted by (the size and shape of) the protruding portion or the recessed portion provided in the at least one of the first member and the second member. Thus, it is possible to accurately set the time difference between the timings at which the first stopper means and the second stopper means are operated, as compared to, for example, the configuration where operation timing adjusting means is provided in the first stopper means and the second stopper means that are made of an elastic body whose size is difficult to control (for example, the configuration where the levels of the first stopper means and the second stopper means are made different from each other).

According to an eleventh aspect of the invention, in the stopper structure according to any one of the first to tenth aspects, the first stopper means is provided in the first member, and the second stopper means is provided in the second member.

In the stopper structure according to the eleventh aspect, because the first stopper means and the second stopper means are formed separately from each other, it is possible to reduce the possibility that the operations of the first stopper means and the second stopper means influence each other. For example, when the first stopper means and the second stopper means are provided in a common elastic the deformation amounts, by which the first stopper means and the second stopper means are deformed, are likely to influence the time difference between the timings at which the first stopper means and the second stopper means are operated. However, in the stopper structure, it is possible to set the timing at which the first stopper means is operated and the timing at which the second stopper means is operated, separately from each other. Therefore, the design can be easily made. Also, the first stopper means and the second stopper means, which are formed separately from each other, are provided in the facing member that faces the second stopper means, and the facing member that faces the first stopper means, respectively. Therefore, space is effectively used to provide the first stopper means and the second stopper means.

According to a twelfth aspect of the invention, in the stopper structure according to the second aspect, the first stopper means is provided in an elastic body at a position close to an surface of the elastic body, and performs the stopper function to restrict a displacement of the second member relative to the first member when the first stopper means contacts the second member; and the second stopper means is a hole portion or a notch portion formed in the elastic body at a position between the first member and the first stopper means.

In the stopper structure according to the twelfth aspect, after the second member contacts the first stopper means, the second member presses the first stopper means toward the hole portion or the notch portion (toward the first member). As a result, the space formed by the hole portion or the notch portion is reduced so that the inner edge and the outer edge of the hole portion or the notch portion contact each other, and the stopper function of the second stopper means is operated. That is, the second stopper means performs the stopper function without directly contacting the second member, and a stroke until the stopper function of the second stopper means is performed is longer than a stroke until the stopper function of the first stopper means is performed, by a stroke for making the inner edge and the outer edge of the hole portion or the notch portion contact each other. Thus, it is possible to suppress generation of slapping sound and vibrations.

According to a thirteenth aspect, in a vibration-proofing structure for a vehicle, the stopper structure according to any one of the first to twelfth aspects is provided between a vehicle that is one of the first member and the second member, and a suspension member that is the other of the first member and the second member.

In the vibration-proofing structure for a vehicle according to the thirteenth aspect, by using the above-described stopper structure, it is possible to suppress the displacement of the suspension member relative to the vehicle body, for example, due to an input from a road surface via the suspension, or due to the reaction force of torque from the engine (differential gear), and to suppress slapping sound and vibrations. That is, in order to suppress slapping sound due to the reaction force of the torque (i.e., to cancel the slapping sound by the operation of the second stopper means), the time difference (a half of wavelength = *λ*/*2* = 1/2f) between the timings at which the first stopper means and the second stopper means are operated is set based on the frequency f of the sound or the vibration to be canceled, or the distance difference or the stroke difference, which corresponds to the time difference, is set based on a collision speed when first torque is input and the stopper function is performed.

According to a fourteenth aspect of the invention, in the vibration-proofing structure according to the thirteenth aspect, a contact surface of at least one of the first stopper means and the second stopper means, which contacts the suspension member or the vehicle body, is an inclined surface that is inclined to make surface contact with the suspension member or the vehicle body due to a displacement of the suspension member around a rotational axis when the suspension member is rotated relative to the vehicle body.

In the vibration-proofing structure for a vehicle according to the fourteenth aspect, rotation of the suspension member around the rotational axis relative to the vehicle body is suppressed. When the rotation of the suspension member is suppressed, each stopper means makes surface contact with the corresponding facing member. Therefore, for example, unlike the configuration where the corner portion of each stopper means contacts the corresponding facing member, it is possible to prevent the deviation of the timing at which each stopper means contacts the corresponding facing member. Thus, it is possible to effectively perform the stopper function, and to suppress vibrations and slapping sound. Particularly, in the configuration where a plurality of first stopper means and a plurality of second stopper means are provided, it is effective that each of the first stopper means and second stopper means makes surface contact with the corresponding facing member.

As described above, the stopper structure and the vibration-proofing structure for a vehicle according to the aspects of the invention have excellent advantageous effects of performing the stopper function when the first member and the second member are displaced relative to each other, and suppressing generation of slapping sound and vibrations.

### BRIEF DESCRIPTION OF THE DRAWINGS

The features and advantages of the invention will become apparent from the following description of example embodiments, given in conjunction with the accompanying drawings, in which:
FIG. 1 is a sectional view showing a stopper structure according to a first embodiment of the invention, taken along the line 1-1 in FIG. 2;
FIG. 2 is a plan view of a stopper portion to which the stopper structure according to the first embodiment of the invention is applied;
FIG 3 is a sectional side view of a rubber mounting to which the stopper structure according to the first embodiment of the invention is applied;
FIG. 4 is a perspective view of a rear suspension member installation structure to which the stopper structure according to the first embodiment of the invention is applied;
FIG. 5 is a graph showing a spring characteristic of the stopper portion to which the stopper structure according to the first embodiment of the invention is applied;
FIG. 6 is a schematic diagram showing a single-degree-of-freedom vibration system that represents the rear suspension member installation structure to which the structure according to the first embodiment of the invention is applied;
FIGS. 7A and 7B are graphs showing a vibration suppression effect produced by the stopper structure according to the first embodiment of the invention, and FIGS. 7C and 7D are graphs showing that vibrations are generated in a configuration according to a comparative example;
FIG. 8A is a graph showing torque input to a rear suspension member to which the stopper structure according to the first embodiment of the invention is applied, and FIG. 8B is a graph showing reaction of the rear suspension member due to the input torque;
FIG. 9 is a sectional view showing a stopper structure according to a second embodiment of the invention;
FIG. 10 is a perspective view showing a stopper structure according to a third embodiment of the invention;
FIG. 11 is a plan view of a stopper portion to which the stopper structure according to the third embodiment of the invention is applied;
FIG 12 is a sectional view showing a stopper structure according to a fourth embodiment of the invention;
FIG. 13 is a sectional view showing a stopper structure according to a fifth embodiment of the invention;
FIG. 14 is a sectional view showing a stopper structure according to a sixth embodiment of the invention;
FIG. 15 is a sectional view showing a stopper structure according to a seventh embodiment of the invention;
FIG. 16 is a perspective view showing the stopper structure according to the seventh embodiment of the invention;
FIG. 17 is a sectional view showing a stopper structure according to an eighth embodiment of the invention;
FIGS. 18A to 18C are lateral views schematically showing how a pre-contact surface, a first stopper surface, and a second stopper surface of the stopper structure according to the eighth embodiment of the invention contact a vehicle body;
FIG. 19 is an enlarged plan view showing a relation between the stopper structure according to the eighth embodiment of the invention and the rotational axis of a rear suspension member;
FIG. 20 is a plan view showing the relation between the stopper structure according to the eighth embodiment of the invention and the rotational axis of the rear suspension member;
FIG. 21 is a perspective view showing a stopper structure according to a ninth embodiment of the invention;
FIG. 22 is a sectional view showing a stopper structure according to a tenth embodiment of the invention; and
FIG. 23 is a sectional view showing a comparative example with respect to the first embodiment of the invention.

### DETAILED DESCRIPTION OF EMBODIMENTS

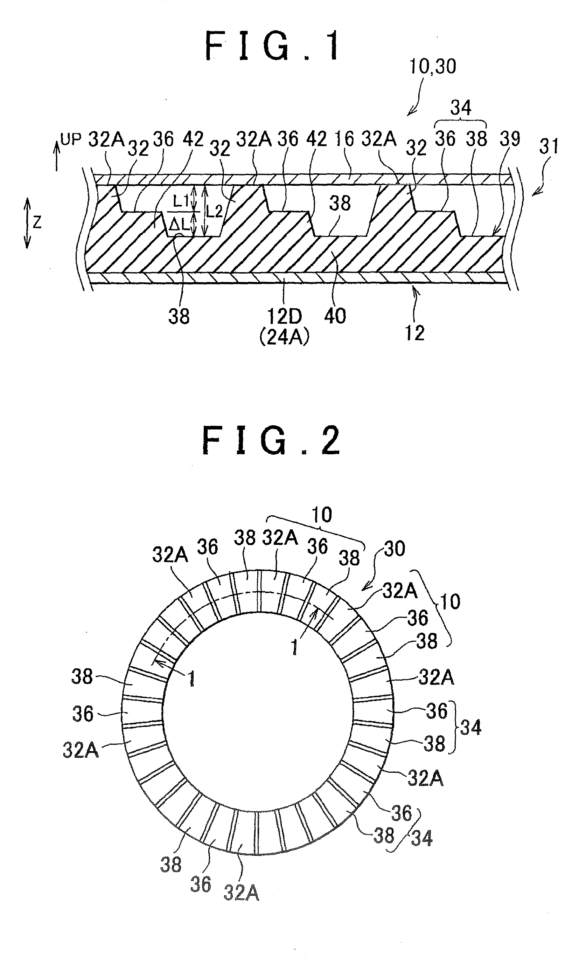

A stopper structure 10 according to an embodiment of the invention will be described with reference to FIG. 1 to FIG 8. First, the general configuration of a rear suspension installation structure 11, to which the stopper structure 10 is applied, will be described. Then, the detailed configuration of the stopper structure 10 will be described. In the drawings, the arrow FR indicates a forward direction in a vehicle-longitudinal direction. The arrow UP indicates an upward direction in a vehicle-height direction. The arrow W indicates a vehicle-width direction.

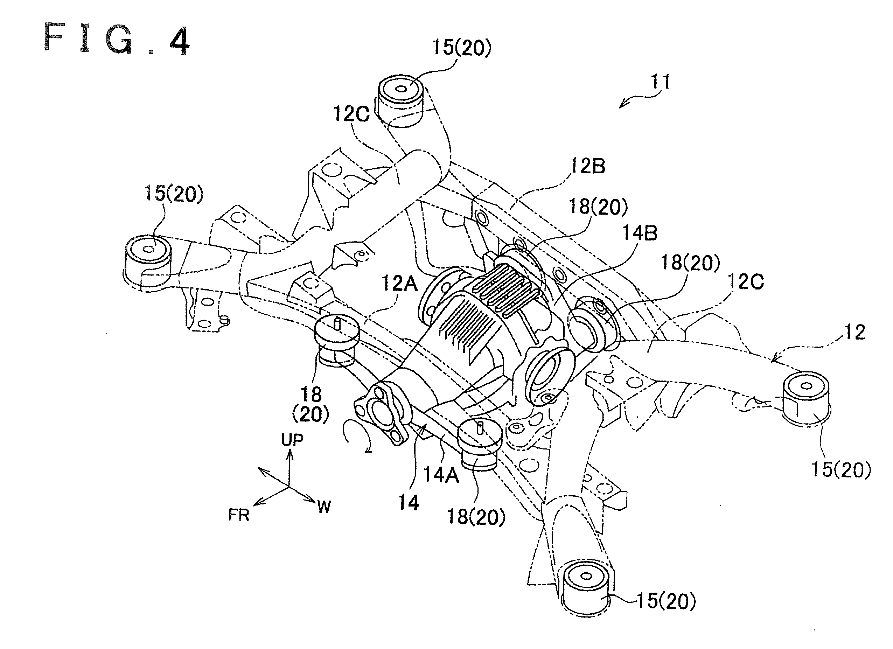

FIG. 4 is a perspective view showing a rear suspension member 12 that is elastically installed (supported) on a vehicle body using the rear suspension member installation structure 11. As shown in FIG. 4, the rear suspension member 12 supports a rear differential gear box 14 that is a differential device that constitutes the power train of a vehicle. Although not shown in the drawings, the rear suspension member 12 also supports a rear suspension that supports rear wheels with respect to the vehicle body. Power is transmitted from an engine to the rear wheels via the rear differential gear box 14.

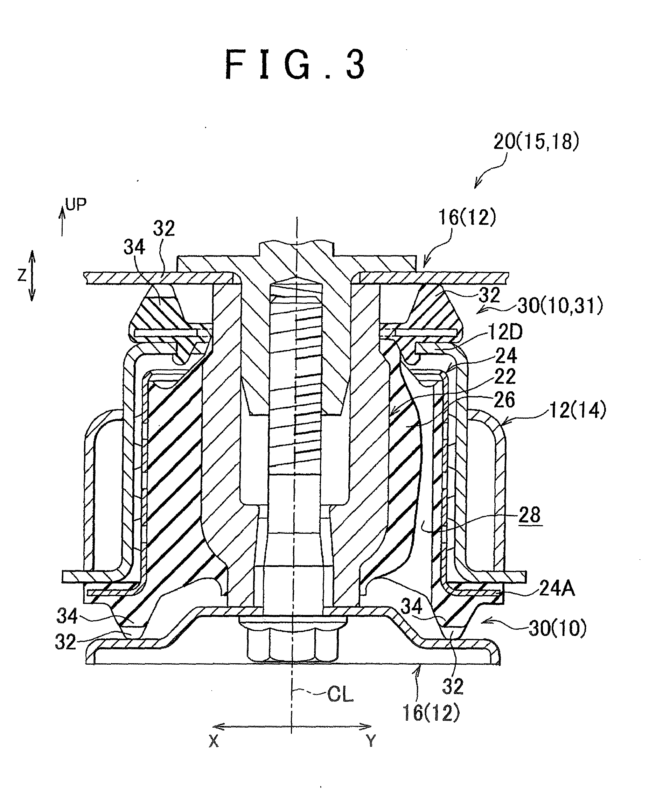

In the rear suspension member installation structure 11, the rear suspension member 12, which may be regarded as a second member (supported body), is elastically supported by a vehicle body 16 (refer to FIG. 3) that may be regarded as a first member (supporting body), through suspension member mounts 15 that may be regarded as a plurality of elastic bodies. The vehicle body 16 may be regarded as the second member, and the rear suspension member 12 may be regarded as the first member. The rear differential gear box 14 is elastically supported by the rear suspension member 12 through a plurality of differential mounts 18.

More specifically, as shown in FIG. 4, the rear suspension member 12 is formed as a framework that has a substantially rectangular frame shape in a plan view. The rear suspension member 12 includes a suspension member front cross 12A and a suspension member rear cross 12B that extend in the vehicle-width direction, and a pair of right and left side rails 12C that connects the suspension member front cross 12A and the suspension member rear cross 12B. The front end portion 14A of the rear differential gear box 14 is connected to, and supported by the suspension member front cross 12A through the pair of differential mounts 18 that is disposed symmetrically in a lateral direction. In addition, the rear end portion 14B of the rear differential gear box 14 is connected to, and supported by the suspension member rear cross 12B through the pair of differential mounts 18 that is disposed symmetrically in the lateral direction.

The rear suspension member 12 is connected to, and supported by the vehicle body 16 through the pair of suspension member mounts 15 that is disposed symmetrically in right and left corner portions that constitute the front outer ends in the vehicle-width direction. In addition, the rear suspension member 12 is connected to, and supported by the vehicle body 16 through the pair of suspension member mounts 15 that is symmetrically disposed in right and left corner portions that constitute the rear outer ends in the vehicle-width direction.

Next, the basic structures of the suspension member mount 15 and the differential mount 18 will be described. The suspension member mount 15 and the differential mount 18 have the same basic structure. Therefore, hereinafter, the suspension member mount 15 and the differential mount 18 will be collectively described as a rubber mounting 20.

As shown in FIG. 3, the rubber mounting 20 mainly includes an inner cylinder 22, an outer cylinder 24, and a cylindrical cushion body 26. The inner cylinder 22 is made of metal. The outer cylinder 24 made of metal is disposed outside the inner cylinder 22 in a radial direction, and covers the inner cylinder 22. The cylindrical cushion body 26 made of synthetic rubber is disposed between the inner cylinder 22 and the outer cylinder 24 that are made of metal to connect the inner cylinder 22 and the outer cylinder 24. Each stopper hole 28 is formed in the cylindrical cushion body 26 to extend through the cylindrical cushion body 26 in substantially parallel with an axial direction, and extend in a portion of the cylindrical cushion body 26 in each of a circumferential direction and a thickness (radial) direction. In the rubber mounting 20, a restoring force is generated when the inner cylinder 22 and the outer cylinder 24 are displaced relative to each other in the radial direction (i.e., the X-direction in FIG. 3, and the Y-direction perpendicular to the X-direction in a cross section perpendicular to the axial direction), and in the axial direction (i.e., the Z-direction in FIG 3).

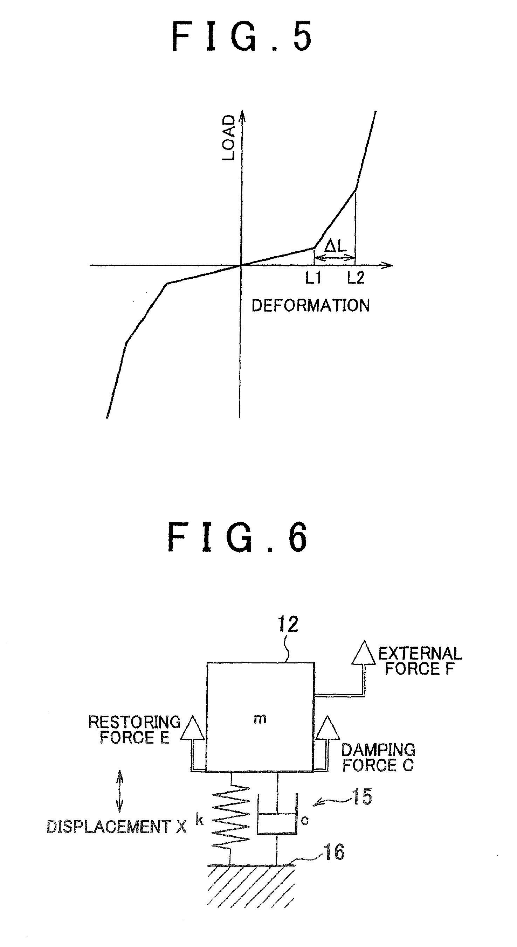

The rubber mounting 20 exhibits a linear spring constant characteristic when the inner cylinder 22 and the outer cylinder 24 are displaced relative to each other in the X-direction. In the rubber mounting 20, when the inner cylinder 22 and the outer cylinder 24 are displaced relative to each other in the Y-direction, the stopper-hole walls that form the stopper hole 28 contact each other. Thus, the rubber mounting 20 is configured so that the spring constant after the stopper-hole walls contact each other is larger than the spring constant before the stopper-hole walls contact each other (refer to FIG 5). Although not shown in the drawings, the stopper holes 28 are formed symmetrically with respect to the axis of the rubber mounting 20 (FIG. 3 shows different cross sections. The cross section on the right side of the center line CL differs from the cross section on the left side of the center line CL by 90 degrees). When the inner cylinder 22 and the outer cylinder 24 are displaced relative to each other toward any one side in the Y-direction, the stopper-hole walls contact each other (i.e., the spring constant changes).

When the vehicle body 16 is fixed to the inner cylinder 22, and the rear suspension member 12 is fixed to the outer cylinder 24, the rubber mounting 20 functions as the suspension member mount 15. When the rear suspension member 12 is fixed to the inner cylinder 22, and the rear differential gear box 14 is fixed to the outer cylinder 24, the rubber mounting 20 functions as the differential mount 18.

Stoppers 30 are provided in connection portions where the members (the rear suspension member 12 and the vehicle body 16, or the rear differential gear box 14 and the rear suspension member 12) are connected to each other through the rubber mounting 20. The stoppers 30 restrict the displacement of the rear suspension member 12 relative to the vehicle body 16 in the Z-direction, or the displacement of the rear differential gear box 14 relative to the rear suspension member 12. As shown in FIG 3, the stopper 30 is provided in each of both sides in the Z-direction. The stoppers 30 are interposed between the member (the vehicle body 16 or the rear suspension member 12) fixed to the inner cylinder 22, and the outer cylinder 24.

In an example shown in FIG 3, the stopper 30 in one side in the Z-direction is formed integrally with the cylindrical cushion body 26. The stopper 30 in the other side in the Z-direction is formed of synthetic rubber, separately from the cylindrical cushion body 26.

The stopper structure 10 according to the embodiment of the invention is applied to the stoppers 30 of the suspension member mounts 15 that support the rear suspension member 12 so that the rear suspension member 12 is displaced relative to the vehicle body 16 in the Z-direction (i.e., the vehicle-height direction). The stopper structure 10 constitutes a vibration-proofing structure 31 for a vehicle.

Before the stopper structure 10 is described, the basic structure (function) of the stopper 30 of the suspension member mount 15 will be supplementarily described. The (lower) stopper 30 formed integrally with the cylindrical cushion body 26 is supported in the Z-direction by a flange 24A provided in the outer cylinder 24. The stopper 30 formed separately from the cylindrical cushion body 26 is supported in the Z-direction by a flange portion 12D provided in the rear suspension member 12.

That is, in the embodiment, the stoppers 30 are fixed to the rear suspension member 12 that is connected to the vehicle body 16 through the suspension member mount 15 so that the rear suspension member 12 is displaced relative to the vehicle body 16. Each stopper 30 mainly includes pre-contact portions 32, and stopper portions 34. Each pre-contact portion 32, which may be regarded as the contact support portion, has a projecting end that contacts the vehicle body 16 fixed to the inner cylinder 22. The stopper portions 34 are disposed apart from the vehicle body 16 in the Z-direction. When the pre-contact portions 32 are compressed and deformed, the stopper portions 34 contact the vehicle body 16. In this configuration, as shown in FIG. 5, the spring constant after the stopper portions 34 contact the vehicle body 16 is larger than the spring constant before the stopper portions 34 contact the vehicle body 16. Thus, the stoppers 30 restrict the displacement of the rear suspension member 12 relative to the vehicle body 16.

Hereinafter, the detailed configuration of the stopper structure 10 will be described. The stoppers 30 in the upper side and the lower side (i.e., the sides in the Z-direction) have the basic structures that are symmetrical in a vertical direction. Therefore, hereinafter, the stopper structure 10 applied to the upper stopper 30 will be described.

FIG 2 is a plan view showing the stopper 30 to which the stopper structure 10 is applied. As shown in FIG. 2 and FIG. 3, the stopper 30 is formed to have a ring shape that is coaxial with the rubber mounting 20 (outer cylinder 24). The plurality of pre-contact portions 32 are disposed at constant intervals in the circumferential direction, and the plurality of stopper portions 34 are disposed at constant intervals in the circumferential direction. The pre-contact portions 32 and the stopper portions 34 are alternately disposed. FIG 1 is a sectional view taken along line 1-1 in FIG. 2. As shown in FIG. 1, in the stopper structure 10, each stopper portion 34 is formed to have a stepped shape.

More specifically, the stopper portion 34 includes a first stopper surface 36, and a second stopper surface 38. The first stopper surface 36, which may be regarded as the first stopper means (first stopper portion), is at a distance L1 from a pre-contact surface 32A in the Z-direction. The pre-contact surface 32A is the projecting end of the pre-contact portion 32, which contacts the vehicle body 16. The second stopper surface 38, which may be regarded as the second stopper means (second stopper portion), is at a distance L2 from the pre-contact surface 32A in the Z-direction. In the embodiment, as shown in FIG. 1 and FIG. 2, the pre-contact surface 32A, the first stopper surface 36, and the second stopper surface 38 are disposed in the stated order in the circumferential direction to form a stepped shape.

Accordingly, in the stopper 30 to which the stopper structure 10 is applied, a first stopper protruding portion 42 and the pre-contact portion 32 are disposed adjacent to each other in the circumferential direction in a manner such that each of the first stopper protruding portion 42 and the pre-contact portion 32 protrudes from a base portion 40 of an elastic body 39. The upper end surface of the base portion 40 is the second stopper surface 38. The upper end surface of the first stopper protruding portion 42 is the first stopper surface 36. The upper end surface of the pre-contact portion 32 is the pre-contact surface 32A. In the embodiment, the pre-contact portion 32 and the first stopper protruding portion 42 integrally protrude from the base portion 40 (that is, the pre-contact portion 32 and the first stopper protruding portion 42 do not separately protrude from the base portion 40).

In the stopper 30 to which the stopper structure 10 is applied, the distance L1 from the pre-contact surface 32A to the first stopper surface 36 in the Z-direction is set based on a permissible displacement of (the supported portion of) the rear suspension member 12 relative to the vehicle body 16. The permissible displacement is set based on, for example, requirements regarding prevention of the interference between the rear suspension member 12 and other members, and the strength of synthetic rubber forming the stopper 30. The distance L2 from the pre-contact surface 32A to the second stopper surface 38 in the Z-direction, more specifically, a level difference ΔL between the first stopper surface 36 and the second stopper surface 38, which is equivalent to the difference between the distance L2 and the distance L1, is set so that the first stopper surface 36 and the second stopper surface 38 contact the vehicle body 16 in response to a predetermined input applied to the rear suspension 12, and there is a predetermined time difference between the timings at which the first stopper surface 36 and the second stopper surface 38 contact the vehicle body 16.

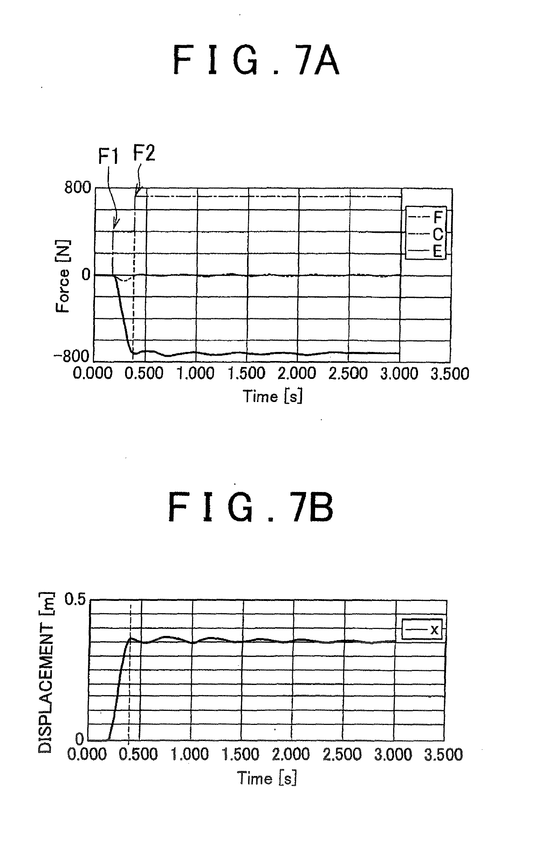

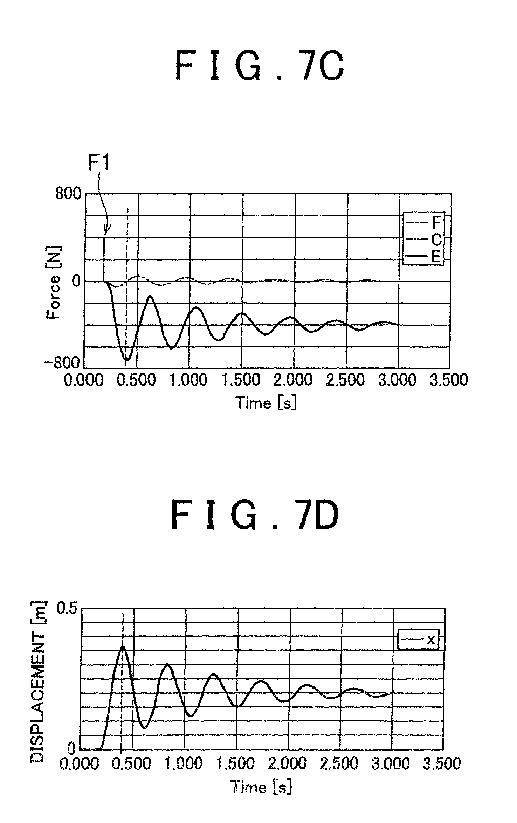

Hereinafter, an example of a method of setting the level difference ΔL will be described with reference to the principle of suppressing vibrations using the stopper structure 10. FIG. 6 shows a single-degree-of-freedom vibration system model that represents the structure for supporting the rear suspension member 12 that faces the vehicle body 16. When a step input (external force) F1 is applied to the vibration system as shown by the chain line in FIG 7C, a restoring force (elastic force) acting on the rear suspension member 12 oscillates at the natural frequency (resonance frequency) of the vibration system, as shown by the solid line in FIG. 7C. Similarly, a damping force acting on the rear suspension member 12 oscillates as shown by the two-dot chain line in FIG. 7C. In this case, the displacement of the rear suspension member 12 relative to the vehicle body 16 oscillates as shown in FIG. 7D.

When a step input F2 is applied to the vibration system at a timing later than the timing at which the step input F1 is applied by a half of a vibration period at the natural frequency of the vibration system, a vibration in opposite phase relative to a vibration generated by the step input F1 is generated. Thus, the vibrations in phases opposite to each other cancel each other. FIG. 7A shows that an oscillating component is removed from each of the restoring force shown by the solid line and the damping force shown by the two-dot chain line (i.e., each of the oscillation of the restoring force, and the oscillation of the damping force is suppressed). FIG 7B shows that an oscillating component is removed from the displacement of the rear suspension member 12. In a multi-degree-of-freedom vibration system as well, the vibrations (noises) are canceled by applying two step inputs.

Accordingly, the level difference ΔL between the first stopper surface 36 and the second stopper surface 38 is set so that the second stopper surface 38 contacts the vehicle body 16 at the timing later than the timing at which the first stopper surface 36 contacts the vehicle body 16 by a half of the natural period of the rear suspension member 12 in the Z-direction. In the embodiment, the level difference ΔL is set to suppress the pitching resonance of the rear suspension member 12, which is generated when high torque is input to the rear suspension member 12 from the engine through the rear differential gear box 14, and the stopper portion 34 contacts the vehicle body 16. The pitching resonance frequency, that is, the natural frequency depends on the inertia mass of the rear suspension member 12, the inertia mass of the rear differential gear box 14, and the spring characteristic of the suspension member mount 15. In the embodiment, the natural frequency is approximately 45 Hz.

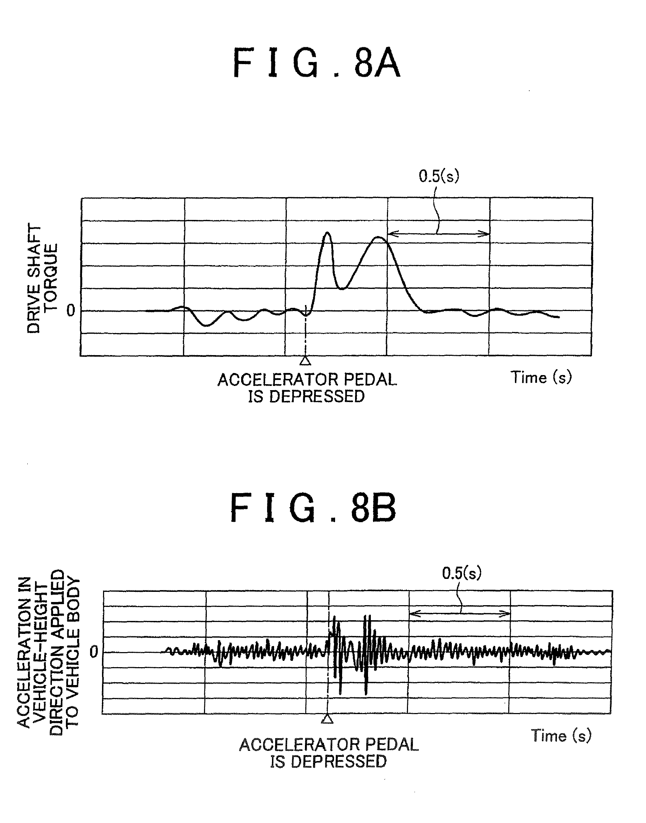

It has been empirically confirmed that acceleration in the vehicle-height direction is applied to the vehicle body 16 (the vibration in the vehicle-height direction is generated in the vehicle body 16) as shown in FIG. 8B, when high torque is input as shown in FIG 8A. Thus, the level difference ΔL between the first stopper surface 36 and the second stopper surface 38 is determined based on a collision speed at which the stopper portion 34 collides with the vehicle body 16, and the time difference (i.e., a half of the above-described pitching resonance period). In the embodiment, the level difference ΔL (approximately 3.3 [mm]) is set based on the collision speed (approximately 300 [mm/s]) and the half (approximately 0.0111 [s]) of the natural period (= 1/45 [s]).

The pitching resonance of the rear suspension member 12 at each suspension member mount 15 is approximated as upward/downward movement (relative displacement in the Z-direction). The first stopper surfaces 36 constituting the plurality of stopper portions 34 contact the vehicle body 16 at the substantially same time. Then, after a predetermined time elapses, the second stopper surfaces 38 contact the vehicle body 16 at the substantially same time.

Next, the advantageous effects obtained in the embodiment will be described.

In the rear suspension member installation structure 11 that includes the stoppers 30 to which the stopper structure 10 thus configured is applied, for example, when high torque is input to the rear suspension member 12 from the engine via the rear differential gear box 14 to accelerate the vehicle, each upper stopper 30 contacts the vehicle body 16. When the vehicle is decelerated, each lower stopper 30 contacts the vehicle body 16. Thus, the displacement of the rear suspension member 12 relative to the vehicle body 16 is restricted.

In the stopper structure 10, each stopper portion 34 includes the first stopper surface 36 and the second stopper surface 38, and the level difference ΔL between the first stopper surface 36 and the second stopper surface 38 is set. Therefore, for example, when the rear suspension member 12 is displaced relative to the vehicle body 16 in the Z-direction due to input of high torque (step input), first, the first stopper surface 36 contacts the vehicle body 16 due to the compression of the pre-contact portion 32, and then, the second stopper surface 38 contacts the vehicle body 16 due to the compression of the first stopper protruding portion 42. Thus, in the stopper 30 to which the stopper structure 10 is applied, the two step inputs are applied in such a manner that the time difference between the timings at which the two step inputs are applied is equal to the half of the natural period of the rear suspension member 12, as shown by the chain line in FIG. 7A.

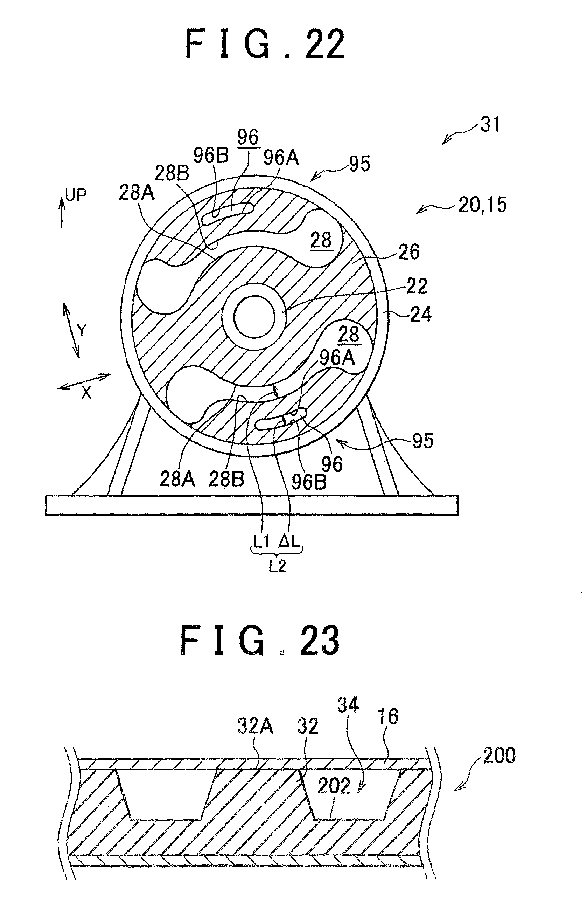

For example, in a stopper structure 200 in a comparative example, which includes only a stopper surface 202 with no step as shown in FIG 23, only one step input is applied by performing the stopper function as shown in FIG 7C. Therefore, the pitching resonance and the slapping sound of the rear suspension member 12 are generated, as shown in FIG. 7C and FIG 7D.

In contrast, in the stopper structure 10, the two step inputs are applied by performing the stopper function, in such a manner that the time difference between the timings at which the two step inputs are applied is equal to the half of the natural period of the rear suspension member 12, as described above. Thus, the slapping sound and the vibration, which are generated by the first step input (collision between the first stopper surface 36 and the vehicle body 16), are canceled by the slapping sound and the vibration in opposite phase, which are generated by the second step input (collision between the second stopper surface 38 and the vehicle body 16).

Thus, in a vehicle provided with the rear suspension member installation structure 11 to which the stopper structure 10 is applied, it is possible to reduce (prevent) the slapping sound due to the collision between the rear suspension member 12 (stopper portion 34) and the vehicle body 16, and to suppress the pitching resonance of the rear suspension member 12, for example, when the vehicle is accelerated.

Also, in the stopper structure 10, the first stopper surface 36 and the second stopper surface 38 are simply formed in the stopper portion 34 in such a manner that there is the level difference ΔL between the first stopper surface 36 and the second stopper surface 38. In such a simple structure, it is possible to set the timings at which the first stopper surface 36 and the second stopper surface 38 contact the vehicle body 16 to perform the stopper function in a manner such that there is a predetermined time difference between the timings.

In the stopper structure 10, the vibrations (noises) are canceled using the timings at which the first stopper surface 36 and the second stopper surface 38 contact the vehicle body 16. Therefore, it is possible to suppress the slapping sound and the pitching resonance, without increasing the volume of synthetic rubber constituting the stopper 30, as described above. Therefore, in the stopper structure 10, it is possible to suppress the slapping sound and the pitching resonance without increasing the size of the stopper 30. Further, the first stopper surfaces 36 constituting the plurality of stopper portions 34 contact the vehicle body 16 at the substantially same time, and then, after the predetermined time elapses, the second stopper surfaces 38 constituting the plurality of stopper portions 34 contact the vehicle body 16 at the substantially same time. Therefore, the stopper load is dispersed substantially evenly to all the stopper portions 34, and supported by all the stopper portions 34.

Further, in the stopper structure 10, the first stopper protruding portion 42 and the pre-contact portion 32 protrude from the base portion 40, and thus, the pre-contact surface 32A, the first stopper surface 36, and the second stopper surface 38 are formed by one member, Therefore, it is possible to suppress the slapping sound and the pitching resonance without increasing the number of components.

Next, other embodiments of the invention will be described. The components and portions, which are basically the same as those in the first embodiment or the above-described configuration, are denoted by the same reference numerals as in the first embodiment or the above-described configuration. Therefore, the description thereof will be omitted, and the illustration thereof may be omitted.

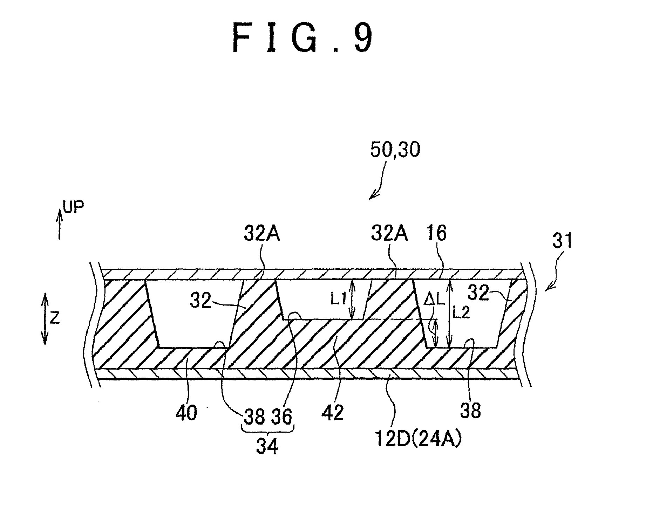

FIG. 9 is a sectional view showing a stopper 30 to which a stopper structure 50 according to a second embodiment of the invention is applied. FIG. 9 corresponds to FIG. 1. As shown in FIG. 9, in the stopper structure 50, the pre-contact portion 32 is disposed between the first stopper surface 36 and the second stopper surface 38 in the circumferential direction of the stopper 30. Thus, the stopper structure 50 differs from the stopper structure 10 in which the first stopper surface 36 and the second stopper surface 38 are disposed adjacent to each other in the circumferential direction.

That is, in the stopper structure 50, each stopper portion 34 is formed by disposing the first stopper surface 36 and the second stopper surface 38 on the sides of the pre-contact portion 32 in the circumferential direction. That is, in the stopper structure 50, portions, in each of which the first stopper surface 36 is disposed between a pair of the pre-contact portions 32, and portions, in each of which the second stopper surface 38 is disposed between the pair of the pre-contact portions 32, are alternately disposed. In the stopper structure 50, each stopper portion 34 is formed by disposing the first stopper surface 36 and the second stopper surface 38 on the sides of the pre-contact portion 32 in the circumferential direction, and the adjacent stopper portions 34 are symmetrical to each other in the circumferential direction (a boundary between the adjacent stopper portions 34 in the circumferential direction is positioned at a center between each pair of the pre-contact portions 32 in the circumferential direction). The other portions of the configuration of the stopper structure 50 are the same as those of the corresponding configuration of the stopper structure 10.

Accordingly, in the stopper structure 50 according to the second embodiment as well, it is possible to obtain the basically same advantageous effects as those obtained in the stopper structure 10 according to the first embodiment. Also, in the stopper structure 50, the first stopper surface 36 is disposed between the pair of pre-contact portions 32. In other words, the pair of pre-contact portions 32 and the first stopper protruding portion 42 integrally protrude from the base portion 40. Therefore, it is possible to suppress the deformation of the first stopper protruding portion 42 due to the compression deformation of the pre-contact portions 32 (portions of the pre-contact portions 32, which are positioned above the first stopper surface 36). That is, it is possible to improve the accuracy of the timing at which the first stopper surface 36 contacts the vehicle body 16 (the timing at which the first step input is applied) based on the position of the first stopper surface 36. Further, in the stopper structure 50, it is possible to reduce the possibility that the compression deformation of the first stopper protruding portion 42 between the pre-contact portions 32 influences the position of the second stopper surface 38 in the Z-direction. Therefore, it is possible to improve the accuracy of the timing at which the second stopper surface 38 contacts the vehicle body 16. Thus, in the stopper structure 50, it is possible to accurately set the time difference between the timings at which the two step inputs are applied.

In the stopper structure 50, the first stopper surfaces 36 and the second stopper surfaces 38 are sparsely disposed in the circumferential direction of the stopper 30 (i.e., the number of the first stopper surfaces 36 and the second stopper surfaces 38 is small), as compared to the stopper structure 10 (in other words, in the stopper structure 50, the first stopper surfaces 36 of the two stopper portions 34 are regarded as one first stopper surface 36, and the second stopper surfaces 38 of the two stopper portions 34 are regarded as one second stopper surface 38). That is, the distance between the first stopper surface 36 and the second stopper surface 38 in the circumferential direction is long. Therefore, for example, the timings at which the first stopper surfaces 36 and the second stopper surfaces 38 contact the vehicle body 16 may vary among the stopper portions 42, depending on the positions of (distance between) the stopper portions 34, for example, when the pitching resonance, which is not the upward/downward movement in a precise sense, but rather the movement around a predetermined axis, is caused. Thus, it is preferable to apply the stopper structure 50 to the portion where the direction, in which the first member and the second member are displaced relative to each other, is regarded as the Z-direction, rather than to the suspension member mounts 15 disposed in a relatively long span to support the rear suspension member 12, as shown in the rear suspension member installation structure 11.

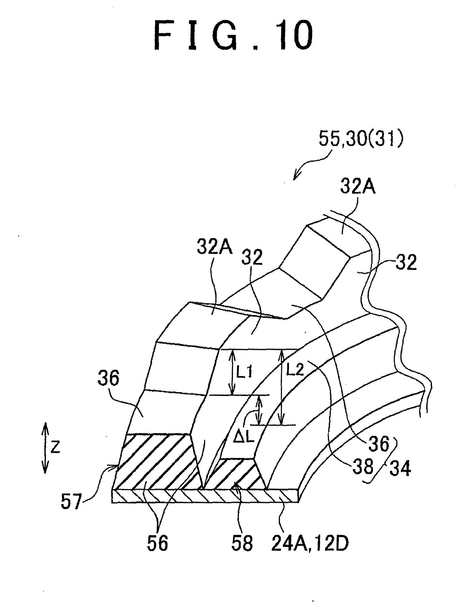

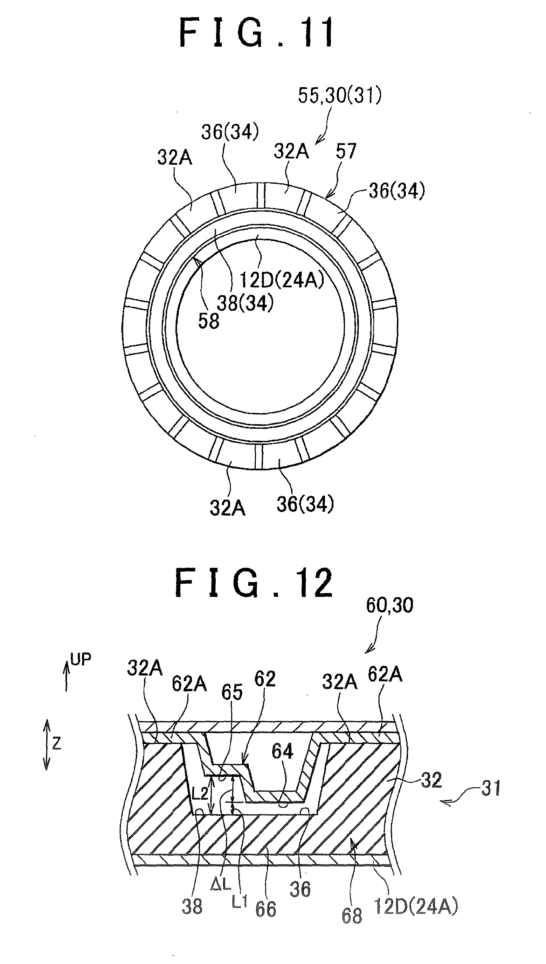

FIG. 10 is a perspective view showing a portion of the stopper 30 to which a stopper structure 55 according to a third embodiment of the invention is applied. FIG. 11 is a plan view showing the stopper 30 to which the stopper structure 55 is applied. As shown in FIG. 10 and FIG. 11, the stopper structure 55 differs from the stopper structure 10 according to the first embodiment, in that the first stopper surface 36 and the second stopper surface 38 are formed independently of each other.

More specifically, in the stopper structure 55, a first elastic body 57 and a second elastic body 58 are formed separately from each other. In the first elastic body 57, the pre-contact portions 32 are disposed to protrude from the base portion 56 at equal intervals. The upper end surface of the base portion 56 is the first stopper surface 36. The upper end surface of the pre-contact portion 32 is the pre-contact surface 32A. The upper end surface of the second elastic body 58 is the second stopper surface 38. In the embodiment, the second elastic body 58 with a ring shape is disposed adjacent to, and inside the first elastic body 57 with a ring shape, in a radial direction. The first elastic body 57 and the second elastic body 58 do not contact each other. Thus, in the stopper structure 55, the compression deformation of the first elastic body 57 does not influence the second elastic body 58 (the position of the second stopper surface 38 in the Z-direction). The other portions of the configuration of the stopper structure 55 are the same as those of the corresponding configuration of the stopper structure 10.

Accordingly, in the stopper structure 55 according to the third embodiment as well, it is possible to obtain the basically same advantageous effects as those obtained in the stopper structure 10 according to the first embodiment. Also, in the stopper structure 55, the first stopper surface 36 and the second stopper surface 38 are formed in the first elastic body 57 and the second elastic body 58, respectively, and the first elastic body 57 and the second elastic body 58 are formed separately from each other. Therefore, the position of the second stopper surface 38 in the Z-direction is not changed by the compression deformation of the first elastic body 57 after the first stopper surface 36 collides with vehicle body 16. Therefore, it is possible to set the timing at which the first stopper surface 36 collides with the vehicle body 16, and the timing at which the second stopper surface 38 collides with the vehicle body 16, separately from each other. Thus, it is easy to make the configuration (design) in which the two step inputs are applied using the first stopper surface 36 and the second stopper surface 38 in such a manner that the time difference between the timings at which the two step inputs are applied is an ideal time difference. For example, in the stopper structure 10, because the position of the second stopper surface 38 in the Z-direction is influenced by the compression deformation of the first stopper protruding portion 42, the level difference ΔL is set by using a plurality of pre-production prototypes (by conducting a plurality of tests). However, in the stopper structure 55, the height of the second elastic body 58, that is, the position of the second stopper surface 38 in the Z-direction can be set, for example, by conducting experiment in which the first elastic body 57 provided with the first stopper surface 36 collides with the vehicle body 16.

FIG 12 is a sectional view showing the stopper 30 to which a stopper structure 60 according to a fourth embodiment of the invention is applied. FIG. 12 corresponds to FIG. 1. As shown in FIG. 12, the stopper structure 60 differs from the stopper structure 10, in that the first stopper surface 36 and the second stopper surface 38 are on the substantially same plane, and contacted surfaces 64 and 65 are formed in a contacted member 62 constituting the vehicle body 16. The contacted surfaces 64 and 65 constitute protruding portions or recessed portions, and the level difference ΔL between the contacted surfaces 64 and 65 is set.

The first stopper surface 36 and the second stopper surface 38 are disposed on a base portion 66 at a position between each pair of the adjacent pre-contact portions 32 in the circumferential direction of elastic body 68. The elastic body 68 includes the base portion 66 and the pre-contact portions 32 that protrude from the base portion 66. The first stopper surface 36 and the second stopper surface 38 constitute the upper surface of the base portion 66. In the contacted member 62, the contacted surfaces 64 and 65 are formed between each pair of adjacent base portions 62A that contact the pre-contact surfaces 32A. The contacted surfaces 64 and 65 are formed adjacent to each other in the circumferential direction. In the embodiment, the contacted member 62 is formed by pressing a metal material in a manner such that the portions of the contacted member 62 are integrated with each other. The contacted surface 64 protrudes from the base portion 62 by a larger amount than an amount by which the contacted surface 65 protrudes from the base portion 62. The first stopper surface 36 is positioned between each pair of the adjacent pre-contact portions 32 of the elastic body 68 to face the contacted surface 64. The second stopper surface 38 is positioned between each pair of the adjacent pre-contact portions 32 of the elastic body 68 to face the contacted surface 65 that protrudes from the base portion 62A by a smaller amount than an amount by which the contacted surface 64 protrudes from the base portion 62A.

Although the detailed description is omitted, in the embodiment, the frequency of the vibrations (slapping sound) that should be suppressed is set to be higher than the frequency (approximately 45 Hz) of the vibrations (slapping sound) that should be suppressed in the stopper structure 10. Also, the level difference ΔL between the contacted surfaces 64 and 65 positioned between the base portions 62A is set to be equal to or below 1 mm. The other portions of the configuration of the stopper structure 60 are the same as those of the corresponding configuration of the stopper structure 10.

Accordingly, in the stopper structure 60 according to the fourth embodiment as well, it is possible to obtain the basically same advantageous effects as those obtained in the stopper structure 10 according to the first embodiment. Also, in the stopper structure 60, the stepped portion having the level difference ΔL is formed in the contacted member 62 of the vehicle body 16. Therefore, the level difference ΔL is accurately set to be equal to or below 1 mm. That is, it is difficult to control the shape of the elastic body 68 made of synthetic rubber with accuracy of 1 mm or below. Therefore, by forming the stepped portion having the level difference ΔL in the vehicle body 16, it is possible to accurately configure the structure in which the two step inputs are generated to cancel the high-frequency vibrations.

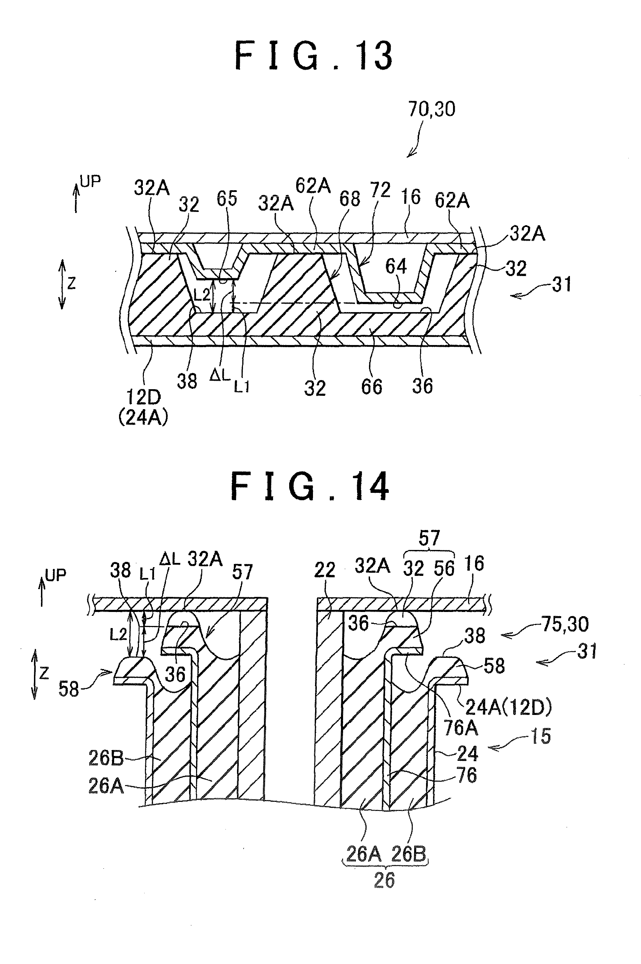

FIG. 13 is a sectional view showing the stopper 30 to which a stopper structure 70 according to a fifth embodiment of the invention is applied. FIG. 13 corresponds to FIG. 12. As shown in FIG. 13, the stopper structure 70 differs from the stopper structure 60 according to the fourth embodiment, in that a contacted member 72 is provided, instead of the contacted member 62 in which the contacted surface 64 and the contacted surface 64 are formed adjacent to each other. In the contacted member 72, the contacted surface 64 and the contacted surface 65 are disposed in different spaces, each of which is positioned between the pre-contact portions 32.

More specifically, in the stopper structure 70, the first stopper surface 36 that faces the contacted surface 64 is disposed between a pair of the pre-contact portions 32, and the second stopper surface 38 that faces the contacted surface 65 is disposed between another pair of the pre-contact portions 32, which is adjacent, in the circumferential direction, to the pair of the pre-contact portions 32 between which the first stopper surface 36 is disposed. In other words, the stopper structure 70 is configured by applying the difference of the stopper structure 50 from the stopper structure 10 (i.e., the idea based on which the stopper structure 50 is configured) to the stopper structure 60. The other portions of the configuration of the stopper structure 70 are the same as those of the corresponding configuration of the stopper structure 10.

Accordingly, in the stopper structure 70 according to the fifth embodiment as well, it is possible to obtain the basically same advantageous effects as those obtained in the stopper structures 10 and 60 according to the first and fourth embodiments. Also, in the stopper structure 70, the first stopper surface 36 is disposed between a pair of the pre-contact portions 32, and the second stopper surface 38 is disposed between another pair of the pre-contact portions 32. Therefore, the deformation of the elastic body 68 (base portion 66) due to the contact between the contacted surface 64 and the first stopper surface 36 hardly influences the second stopper surface 38. That is, in the stopper structure 60, because the first stopper surface 36 and the second stopper surface 38 are adjacent to each other, when the base portion 66 is compressed and deformed due to collision between the contacted surface 64 and the first stopper surface 36, the second stopper surface 38 is displaced in the Z-direction. However, in the stopper structure 70, it is possible to suppress the displacement of the second stopper surface 38 in the Z-direction due to the contact between the contacted surface 64 and the first stopper surface 36. Thus, it is possible to accurately set the time difference between the timings at which the above-described two step inputs are applied.

In the stopper structure 70, the first stopper surfaces 36 and the second stopper surfaces 38 are sparsely disposed in the circumferential direction of the stopper 30 (i.e., the number of the first stopper surfaces 36 and the second stopper surfaces 38 is small), as in the stopper structure 50. Thus, it is preferable to apply the stopper structure 70 to the portion where the direction, in which the first member and the second member are displaced relative to each other, is regarded as the Z-direction, rather than to the suspension member mounts 15 disposed in a relatively long span to support the rear suspension member 12, as shown in the rear suspension member installation structure 11.

In each of the fourth and fifth embodiments, the contacted member 62 or 72 that includes the contacted surfaces 64 and the contacted surfaces 65 is formed by pressing a metal material. However, the invention is not limited to this configuration. For example, the contacted surfaces 64 and 65 may be integrally formed in a portion of the vehicle body 16, in which the rear suspension member 12 is fixed (or the inner cylinder 22 is fixed), for example, by press forming. The contacted surfaces 64 and 65 may be integrally formed in the flange 24A of the outer cylinder 24, for example, by press forming, and the elastic body 68 may be turned upside down, and disposed on the vehicle body 16. Alternatively, the contacted member 62 may be a casting.

FIG. 14 is a sectional view showing the stopper 30 to which a stopper structure 75 according to a sixth embodiment of the invention is applied. FIG. 14 corresponds to FIG. 10. As shown in FIG. 14, the stopper structure 75 differs from the stopper structure 55 according to the third embodiment, in that the suspension member mount 15 (rubber mounting 20), to which the stopper structure 75 is applied, includes an inter-ring 76, the first stopper surfaces 36 are formed in the inter-ring 76, and the second stopper surfaces 38 are formed in the outer cylinder 24.

That is, in the stopper structure 75, a first elastic body 57 is supported by a flange 76A of the inter-ring 76. In the first elastic body 57, the pre-contact portions 32 are disposed to protrude from the base portion 56 at equal intervals in the circumferential direction, and the first stopper surface 36 is formed between each pair of the adjacent pre-contact portions 32. A second elastic body 58 is supported by the flange 24A of the outer cylinder 24, and the upper end surface of the second elastic body 58 is the second stopper surface 38. That is, in the embodiment, the second elastic body 58 has a larger diameter than that of the first elastic body 57.

In the suspension member mount 15 (the rubber mounting 20) that includes the inter-ring 76, the cylindrical cushion body 26 is divided into two portions, that is, an inner cylindrical cushion body 26A and an outer cylindrical cushion body 26B. The inner cylindrical cushion body 26A is positioned inside the outer cylindrical cushion body 26B in the radial direction. In FIG. 14, the first elastic body 57 is integrated with the inner cylindrical cushion body 26A, and the second elastic body 58 is integrated with the outer cylindrical cushion body 26B. However, the first elastic body 57 and the second elastic body 58 may be formed separately from the cylindrical cushion body 26 (the lower stopper 30 (not shown) is formed separately from the cylindrical cushion body 26). The other portions of the configuration of the stopper structure 75 are the same as those of the corresponding configuration of the stopper structure 55.

Accordingly, in the stopper structure 75 according to the sixth embodiment as well, it is possible to obtain the same action and the same advantageous effects as those obtained in the stopper structures 10 and 55 according to the first and third embodiments. Also, in the stopper structure 75, the first elastic body 57 and the second elastic body 58, which are separate members, are disposed using the existing outer cylinder 24 and the inter-ring 76. Therefore, although the second elastic body 58 is added, no (or few) restrictions are imposed on the space where the first and second elastic body 57 and 58 are disposed. That is, in the structure 55, because the first elastic body 57 and the second elastic body 58 are disposed adjacent to each other in the radial direction, for example, it may be required to increase the width of the flange 24A of the outer cylinder 24. However, in the stopper structure 75, the first elastic body 57 and the second elastic body 58 can be disposed using the existing flanges 24A and 76A.

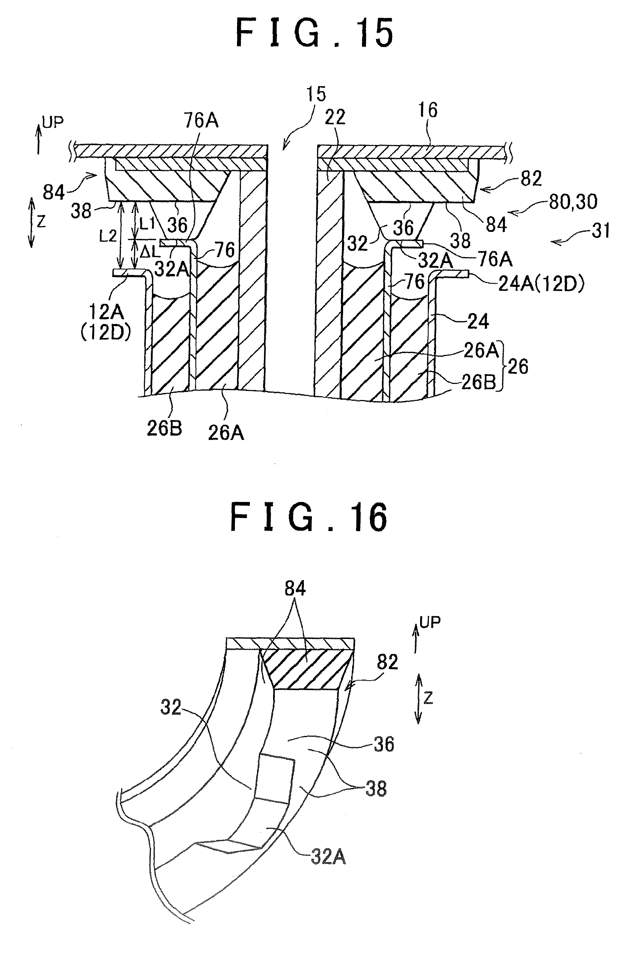

FIG 15 is a sectional view showing the stopper 30 to which a stopper structure 80 according to a seventh embodiment of the invention is applied. FIG. 15 corresponds to FIG 1. As shown in FIG 15, the stopper structure 80 differs from the stopper structure 10 according to the first embodiment, in that an elastic body 82 is provided on the vehicle body 16, and the flange 76A of the inter-ring 76 and the flange 24A of the outer cylinder 24 are contact surfaces for the first stopper surface 36 and the second stopper surface 38, respectively. In the elastic body 82, the first stopper surface 36 and the second stopper surface 38 are formed.

As shown in FIG. 16, the elastic body 82 includes a base portion 84. The radially inner portion of the lower end surface of the base portion 84 is the first stopper surface 36. The radially outer portion of the lower end surface of the base portion 84 is the second stopper surface 38. The pre-contact portions 32 are disposed at equal intervals in the circumferential direction to protrude downward from the radially inner portion of the base portion 84. The lower end surface of the pre-contact portion 32 is the pre-contacted surface 32A. Accordingly, in the embodiment, the first stopper surface 36 and the second stopper surface 38 are on the substantially same plane. The stroke difference, which is equivalent to ΔL, is set using the positions of the flanges 24A and 76A in the Z-direction.

In the stopper structure 80, the pre-contact surfaces 32A preliminarily contact the flange 76A of the inter-ring 76, the first stopper surface 36 faces the flange 76A of the inter-ring 76, and the second stopper surface 38 faces the flange 24A of the outer cylinder 24. The difference between the distance between the first stopper surface 36 and the flange 76A, and the distance between the second stopper surface 38 and the flange 24A is set to ΔL. In other words, in the structure 80, the contacted surfaces 64 and 65 in the stopper structure 70 are formed in the suspension member mount 15, and the elastic body 82 equivalent to the elastic body 68 is provided on the vehicle body 16. The other portions of the configuration of the stopper structure 80 are the same as those of the corresponding configuration of the stopper structure 10.

Accordingly, in the stopper structure 80 according to the seventh embodiment as well, it is possible to obtain the basically same action and the same advantageous effects as those obtained in the stopper structures 10 and 70 according to the first and fifth embodiments. The same action and advantageous effects as those obtained in the stopper structure 70 will be supplementarily described. In the stopper structure 80, the first stopper surface 36 and the second stopper surface 38 are formed in different portions in the radial direction. Therefore, the deformation of the base portion 84 due to the contact between the flange 76A of the inter-ring 76 and the first stopper surface 36 hardly influences the second stopper surface 38. This suppresses the displacement of the second stopper surface 38 in the Z-direction.

In the seventh embodiment, the elastic body 82 is fixed to the vehicle body 16. However, the invention is not limited to this configuration. For example, at least one of the first elastic body 57 and the second elastic body 58 in the stopper structure 70 may be turned upside down and fixed to the vehicle body 16. In this configuration, the first stopper surface 36 and the second stopper surface 38 are formed in the first elastic body 57 and the second elastic body 58 that are independent of each other. Thus, it is easy to make the configuration (design) in which the two step inputs are applied by the first stopper surface 36 and the second stopper surface 38 in such a manner that the time difference between the timings at which the two step inputs are applied is an ideal time difference. Also, in the configuration where the first elastic body 57 and the second elastic body 58, which are independent of each other, are provided, it is possible to reduce the restrictions on the space where the first and second elastic bodies 57 and 58 are disposed.

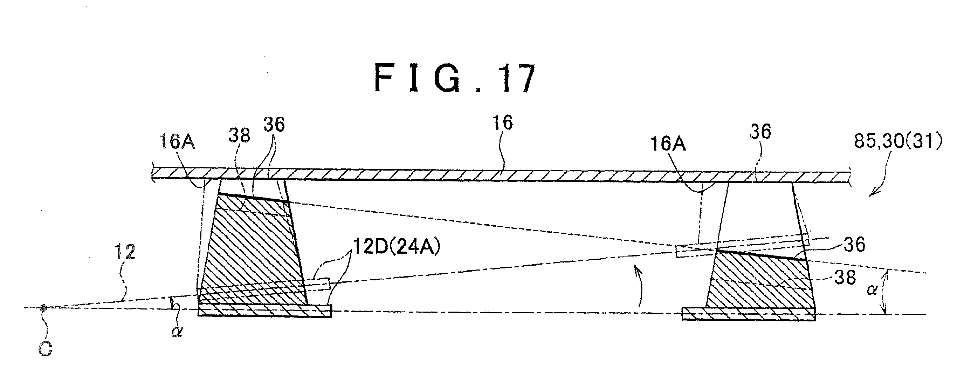

FIG. 17 is a schematic sectional view showing the main portion of the stopper 30 to which stopper structure 85 according to an eighth embodiment of the invention is applied. As shown in FIG. 17, the stopper structure 85 differs from the stopper structure 10 according to the first embodiment, in that each first stopper surface 36 and each second stopper surface 38 are inclined surfaces that are inclined with respect to a contacted surface 16A of the vehicle body 16 in an initial state where each pre-contact surface 32A contacts the vehicle body 16. Thus, in the stopper structure 85, in response to the pitching vibrations of the rear suspension member 12, the substantially entire areas of the first stopper surfaces 36 contact the vehicle body 16 at the substantially same time, and the substantially entire areas of the second stopper surfaces 38 contact the vehicle body 16 at the substantially same time. Hereinafter, the stopper structure 85 will be described more specifically.

In the stopper 30 with a ring shape, which is applied to the suspension member mount 15 provided at each of four corners of the rear suspension member 12, a portion of the rear suspension member 12, which is far from a rotational center around which the rear suspension member 12 is rotated relative to the vehicle body 16, is displaced by a large amount in the vehicle-height direction, as compared to a portion of the rear suspension member 12, which is close to the rotational center. Therefore, the first stopper surface 36 and the second stopper surface 38 are inclined to compensate for the difference in the displacement according to the distance from the rotational center. More specifically, as shown in FIG. 17, in the configuration where all the portions (entire area) of each first stopper surface 36 contacts the vehicle body 16 when the rear suspension member 12 is rotated around a rotational center C by an angle α, each first stopper surface 36 is the inclined surface that is inclined by the angle α so that each first stopper surface 36 faces toward the side opposite to the side where the rotational center C is positioned.

Although not shown, in the configuration where all the portions (entire area) of each second stopper surface 38 contacts the vehicle body 16 when the rear suspension member 12 is similarly rotated around the rotational center C by an angle β (> α), each second stopper surface 38 is the inclined surface that is inclined by the angle β so that each second stopper surface 38 faces toward the side opposite to the side where the rotational center C is positioned.

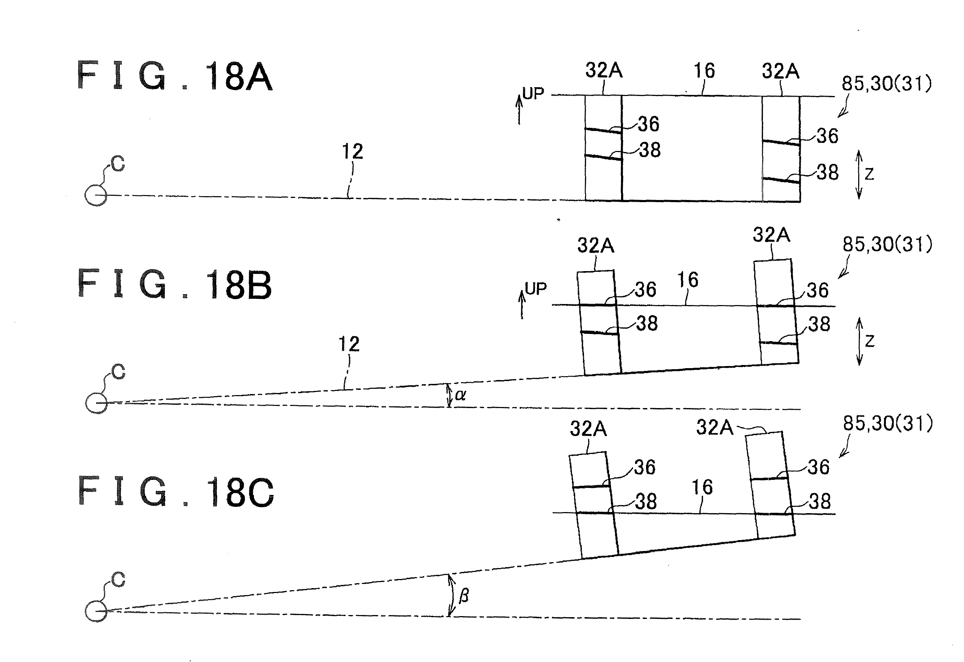

Thus, in the stopper structure 85, as schematically shown in FIG. 18B, when the rear suspension member 12 is rotated around the rotational center C by the angle α relative to the vehicle body 16, the entire areas of the first stopper surfaces 36 contact the vehicle body 16, that is, the first stopper surfaces 36 make surface contact with the vehicle body 15 at the substantially same time. Similarly, as schematically shown in FIG. 18C, in the stopper structure 85, when the rear suspension member 12 is rotated around the rotational center C by the angle β relative to the vehicle body 16, the entire areas of the second stopper surfaces 38 contact the vehicle body 16, that is, the second stopper surfaces 38 make surface contact with the vehicle body 16 at the substantially same time. That is, the plurality of first stopper surfaces 36 are formed along one common plane that is inclined by the angle α relative to the vehicle body 16 (horizontal surface). The plurality of second stopper surfaces 38 are formed along one common plane that is inclined by the angle β relative to the vehicle body 16.

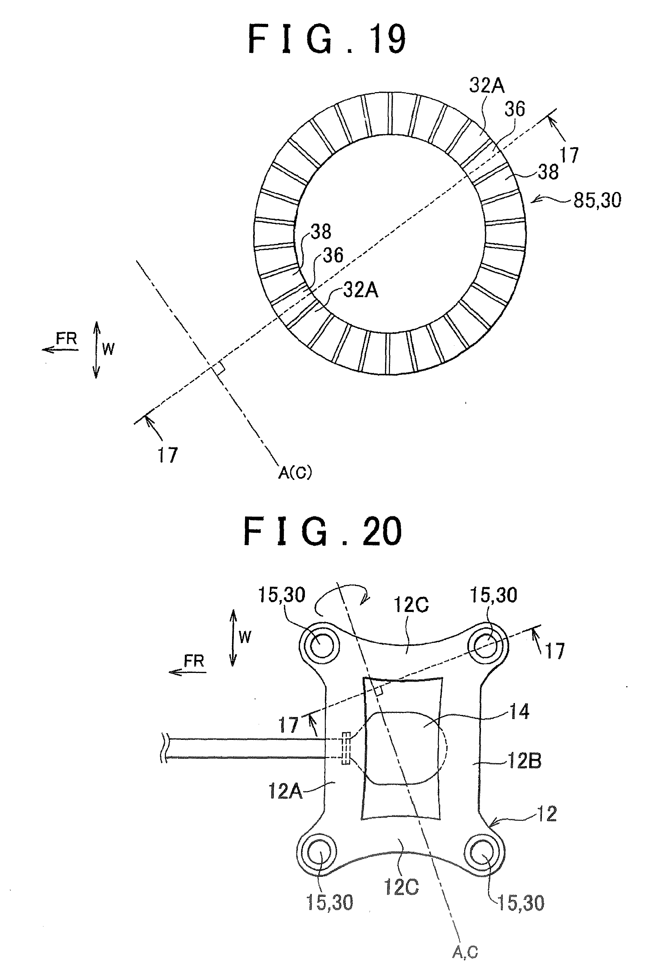

The rotational center C will be supplementarily described. When high torque is input to the rear suspension member 12 from the engine, the rear suspension member 12 receives reaction force of a drive shaft according to the differential ratio of the rear differential gear box 14, instead of pure pitching movement, in a precise sense. As a result, pitching movement accompanied by roll movement is caused. Thus, the rotational axis (rotational center C) around which the rear suspension member 12 is rotated relative to the vehicle body 16 is the rotational axis A that is inclined with respect to the vehicle-width direction, as shown in FIG 19 and FIG. 20, instead of the axis that extends along the vehicle-width direction. The (inclination) of the rotational axis A can be calculated based on the mass of the rear suspension member 12, the mass of the rear differential gear box 14, the spring constant of the suspension mount 15, the spring constant of the differential mount 18, and the reduction ratio of the rear differential gear box 14.

Each of FIG. 19 and FIG. 20 shows the rotational axis A when high torque is input to the rear suspension member 12 from the engine during acceleration. In the embodiment, FIG. 17 is a sectional view taken along the line 17-17 in each of FIG. 19 and FIG. 20.

In the stopper structure 85, the rotational axis A is the rotational center C in FIG. 17. The inclination angle of each first stopper surface 36 and each second stopper surface 38 is set in the above-described manner so that as the first stopper surface 36 and the second stopper surface 38 are farther from the rotational axis A in the direction perpendicular to the rotational axis A, the first stopper surface 36 and the second stopper surface 38 are farther from the vehicle body 16. The other portions of the configuration of the stopper structure 85 are the same as those of the corresponding configuration of the stopper structure 10.

Accordingly, in the stopper structure 85 according to the eighth embodiment as well, it is possible to obtain the basically same action and the same advantageous effects as those obtained in the stopper structure 10 according to the first embodiment. Also, in the stopper structure 85, because each first stopper surface 36 and each second stopper surface 38 are the inclined surfaces, when the first step input of the two step inputs is applied, the entire areas of the first stopper surfaces 36 contact the vehicle body 16 at the substantially same time. When the second step input is applied, the entire areas of the second stopper surfaces 38 contact the vehicle body 16 at the substantially same time. Thus; the two step inputs can be reliably and accurately generated to cancel the pitching resonance of the rear suspension member 12 (pitching resonance accompanied by roll movement).

In the eighth embodiment, each first stopper surface 36 and each second stopper surface 38 are inclined in the structure according to the first embodiment. However, the invention is not limited to this configuration. The stopper structure using surface contact in the eighth embodiment may be applied to the structures according to the second to seventh embodiments. Accordingly, for example, the first stopper surface 36 and the second stopper surface 38 may be inclined, the vehicle body 16 may be inclined, the contacted surfaces 64 and 65 may be inclined, and the flange 24A (the flange portion 12D) may be inclined.

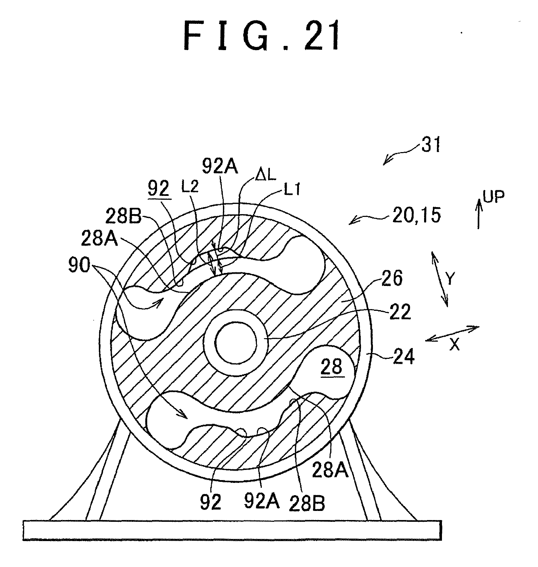

FIG. 21 is a sectional view of a stopper hole 28 to which a stopper structure 90 according to a ninth embodiment of the invention is applied, the sectional view taken along the direction perpendicular to the axis of the stopper hole 28. As shown in FIG 21, the stopper structure 90 differs from, for example, the stopper structure 10 which is applied to the stopper 30 for restricting the relative displacement in the Z-direction, in that the stopper structure 90 is applied to the stopper hole 28 for restricting the relative displacement between the inner cylinder 22 and the outer cylinder 24 in the radial direction of the rubber mounting 20 (in the Y-direction).

In the stopper structure 90, in a hole edge of the stopper hole 28 in the cylindrical cushion body 26, an inner hole edge 28A is positioned close to the inner cylinder 22, and an outer hole edge 28B is close to the outer cylinder 24. The inner hole edge 28A and the inner cylinder 22 are integrally displaced relative to the outer hole edge 28B. Because a recessed portion 92 is formed in the outer hole edge 28B, the above-described two step inputs are generated. The level difference ΔL between the outer hole edge 28B and the bottom surface 92A of the recessed portion 92 is set.

That is, in the stopper structure 90, when the inner hole edge 28A contacts the outer hole edge 28B, the first step input is generated. When the inner hole edge 28A contacts the bottom surface 92A of the recessed portion 92, the second step input is generated. Accordingly, in the stopper structure 90, the outer hole edge 28B may be regarded as the first stopper means (first stopper portion). The bottom surface 92A of the recessed portion 92 may be regarded as the second stopper means (second stopper portion).

The rubber mounting 20, to which the stopper structure 90 is applied, may be used as, for example, the differential mount 18 that supports the rear end portion 14B of the differential gear box 14 with respect to the rear suspension member 12, and the engine mount that supports the engine with respect to the vehicle body.

In the stopper structure 90 according to the ninth embodiment as well, the two step inputs are generated when the relative displacement between the inner cylinder 22 (the second member) and the outer cylinder 24 (the first member) is restricted. Therefore, it is possible to obtain the basically same action and the same advantageous effects as those obtained in the stopper structure 10 according to the first embodiment.

FIG. 22 is a sectional view of the stopper hole 28 to which a stopper structure 95 according to a tenth embodiment of the invention is applied, the sectional view taken along the direction perpendicular to the axis of the stopper hole 28. As shown in FIG 22, the stopper structure 95 differs from, for example, the stopper structure 90 according to the ninth embodiment, in that instead of the recessed portion 92, a hollow portion 96 is formed between the outer cylinder 24 and the stopper hole 28 (outer hole edge 28B).

The hollow portion 96 is formed to be a long hole that is long in the circumferential direction of the rubber mounting 20, and short in the radial direction of the rubber mounting 20. The length of the hollow portion 96 in the short length direction (the radial direction) is equivalent to ΔL. Accordingly, in the stopper structure 95, when the inner hole edge 28A contacts the outer hole edge 28B, the first step input is generated. When an inner edge 96A of the hollow portion 96 contacts an outer edge 96B of the hollow portion 96, the second step input is generated. In the stopper structure 95, the outer hole edge 28B may be regarded as the first stopper portion (the first stopper means), and the hollow portion 96 may be regarded as the second stopper portion (the second stopper means). The other portions of the configuration of the stopper structure 95 are the same as those of the corresponding configuration of the stopper structure 90.

Accordingly, in the stopper structure 95 according to the tenth embodiment as well, it is possible to obtain the same action and the same advantageous effects as those obtained in the stopper structure 90 according to the ninth embodiment. Instead of the hollow portion 96, for example, a notch portion may be provided to form a gap between the inner surface of the outer cylinder 24 and the stopper hole 28.

In the above-described embodiments, the stopper structures 10,50, 55, 60, 70, 75, 80, 85, 90, and 95 are applied to the rear suspension member installation structure 11, the engine mounting system, and the like of a vehicle. However, the invention is not limited to these purposes. For example, the invention may,be used for various purposes, for example, the purpose of suppressing the vibrations and slapping sound of the stopper portion of a crane, a loading arm, a robot arm, and the like. Also, the stopper structures 10, 50, 55, 60, 70, 75, 80, 85, 90, and 95 according to the embodiments of the invention may be applied to a portion (for example, the stopper of the differential mount 18) between the rear suspension member 12 (the first member or the second member) and the rear differential gear box 14 (the second member or the first member).

Also, in the above-described embodiments, each of the stopper portion 34 and the stopper hole 28 includes two contact portions (the stopper portion 34 includes the first stopper surface 36 and the second stopper surface 38, and the stopper hole 28 includes the outer hole edge 28B and the bottom surface 92A, or the outer hole edge 28B and the hollow portion 96), and the two step inputs are generated (the spring characteristic shown in FIG. 5 is obtained) by the contact movement in two stages. However, the invention is not limited to this configuration. For example, the two step inputs may be generated using an elastic body that exhibits the non-linear spring characteristic as shown in FIG. 5 although the elastic body does not include two contact portion, and the entire elastic body is maintained in contact with the vehicle body. Also, the two step inputs may be generated using the stopper portion 34 whose spring constant is changed only one time while the stopper portion 34 is displaced (in combination with the pre-contact portion 32). Also, the two step inputs may be generated by controlling the rigidity of a variable rigidity stopper using, for example, a variable orifice or electroviscous fluid.

While the invention has been shown in described with respect to the example embodiments, it will be understood by those skilled in the art that various changes and modifications may be made without departing from the scope of the invention.

## Claims

1. A stopper structure **characterized by** comprising:
first stopper means (36) that is provided between a first member (16) and a second member (12) that are connected to each other in a manner such that the first member (16) and the second member (12) are displaced relative to each other, wherein the first stopper means (36) restricts a relative displacement between the first member (16) and the second member (12); and
second stopper means (38) that is provided between the first member (16) and the second member (12), wherein a stopper function of the second stopper means (38) is performed after a stopper function of the first stopper means (36) is performed in a manner such that there is a predetermined time difference between a timing at which the stopper function of the first stopper means (36) is performed and a timing at which the stopper function of the second stopper means (38) is performed, in response to a predetermined input that displaces the first member (16) and the second member (12) relative to each other.

2. The stopper structure according to claim 1, wherein
the predetermined timing difference is set using a difference between an amount by which the first member (16) and the second member (12) are displaced relative to each other until the stopper function of the first stopper means (36) is performed, and an amount by which the first member (16) and the second member (12) are displaced relative to each other until the stopper function of the second stopper means (38) is performed.

3. A stopper structure **characterized by** comprising:
first stopper means (36) made of an elastic body, which is provided in a first member (16), and that restricts a displacement of a second member (12) relative to the first member (16) the first stopper means (36) contacts the second member (12), wherein the second member (12) is connected to the first member (16) in a manner such that the second member (12) is displaced relative to the first member (16); and
second stopper means (38) which is provided in one of the first member (16) and the second member (12), and which is disposed in a manner such that a distance between the second stopper means (38) and the other of the first member (16) and the second member (12) in a relative displacement direction in which the first member (16) and the second member (12) are displaced relative to each other is longer than a distance between the first stopper means (36) and the second member (12) in the relative displacement distance, by a predetermined distance.

4. The stopper structure according to any one of claims 1 to 3, wherein:
a plurality of combinations of the first stopper means (36) and the second stopper means (38) are provided; and
the timing at which the stopper function of the first stopper means (36) in each of the combinations is performed is set to be in a predetermined range that is smaller than the predetermined time difference, and the timing at which the stopper function of the second stopper means (38) in each of the combinations is performed is set to be in another predetermined range that is smaller than the predetermined time difference.

5. The stopper structure according to any one of claims 1 to 4, wherein:
the stopper structure is formed to have a ring shape; and
a plurality of the first stopper means (36) and a plurality of the second stopper means (38) are disposed in a circumferential direction.

6. The stopper structure according to any one of claims 1 to 5, wherein:
the first stopper means (36) and the second stopper means (38) are formed integrally with an elastic body by making levels of contact portions of the elastic body, which contact the first member (16) or the second member (12), different from each other.

7. The stopper structure according to any one of claims 1 to 6, wherein:
the stopper structure further includes a contact support portion (32) that is provided in one of the first member (16) and the second member (12), and that contacts the other of the first member (16) and the second member (12) when the first member (16) and the second member (12) are not displaced relative to each other; and
the contact support portion (32), the first stopper means (36), and the second stopper means (38) are formed in a stated order, integrally with an elastic body that has a stepped shape.

8. The stopper structure according to any one of claims 1 to 6, wherein:
the stopper structure further includes a contact support portion (32) that is provided in one of the first member (16) and the second member (12), and that contacts the other of the first member (16) and the second member (12) when the first member (16) and the second member (12) are not displaced relative to each other; and
the contact support portion (32), the first stopper means (36), and the second stopper means (38) are formed integrally with an elastic body in a manner such that the first stopper means (36) is disposed adjacent to, and on a side of the contact support portion (32), and the second stopper means (38) is disposed adjacent to, and on another side of the contact support portion (32), which is opposite to the side where the first stopper means (36) is disposed.

9. The stopper structure according to any one of claims 1 to 5, wherein:
the first stopper means (36) and the second stopper means (38) are formed separately from each other.

10. The stopper structure according to any one of claims 1 to 9, wherein:
a protruding portion (64) or a recessed portion (65) is formed in at least one of the first member (16) and the second member (12) to adjust timings at which the first stopper means (36) and the second stopper means (38) contact the at least one of the first member (16) and the second member (12).

11. The stopper structure according to any one of claims 1 to 10, wherein:
the first stopper means (36) is provided in the first member (16), and the second stopper means (38) is provided in the second member (12).

12. The stopper structure according to claim 2, wherein:
the first stopper means (28A) is provided in an elastic body at a position close to a surface of the elastic body, and performs the stopper function to restrict a displacement of the second member (22) relative to the first member (24) when the first stopper means (28A) contacts the second member (22); and
the second stopper means (92A) is a hole portion or a notch portion formed in the elastic body at a position between the first member (24) and the first stopper means (28A).

13. A vibration-proofing structure for a vehicle, wherein
the stopper structure according to any one of claims 1 to 12 is provided between a vehicle that is one of the first member (16) and the second member (12), and a suspension member that is the other of the first member (16) and the second member (12).

14. The vibration-proofing structure according to claim 13, wherein
a contact surface of at least one of the first stopper means (36) and the second stopper means (38), which contacts the suspension member (12) or the vehicle body (16), is an inclined surface that is inclined to make surface contact with the suspension member (12) or the vehicle body (16) due to a displacement of the suspension member (12) around a rotational axis when the suspension member (12) is rotated relative to the vehicle body (16).
